# EUROPEAN PATENT SPECIFICATION

(11) **EP 2 192 467 B1**
(45) Date of publication and mention of the grant of the patent: **07.12.2011**
(21) Application number: 09012743.2
(22) Date of filing: 08.10.2009
(51) Int. Cl.: G05D 23/13, F24D 17/00

(54) **Thermostatic valve assembly and method for controlling the temperature of the hot water in an integrated sanitary plant, with solar panels - modulating gas-fired boiler**
Thermostatische Ventilanordnung und -Verfahren zur Heizwassertemperatursteuerung in einer integrierten Sanitäranordnung mit Sonnenkollektoren und einem moduliertem Gaskessel
Soupape thermostatique et méthode de contrôle de la température de l'eau chaude dans une installation sanitaire équipée de collecteurs solaires et d'un chauffe-eau à gaz

(30) Priority: 14.10.2008 IT MI20081813
(43) Date of publication of application: 02.06.2010
(73) Proprietor: Caleffi S.p.A., 28010 Fontaneto d'Agogna, Novara (IT)
(72) Inventor: Caleffi, Marco, 28021 Borgomanero, Novara (IT)
(74) Representative: Coloberti, Luigi

(56) References cited:
- JP-A- 57 157 941
- NL-A- 8 401 359
- US-A- 4 191 172

## Description

### BACKGROUND OF THE INVENTION

This invention refers to a valve assembly for integrated thermal plants, of the type comprising solar panels - instantaneous gas-fired boiler, mainly used for the production of sanitary hot water; however, other possible uses for the valve assembly claimed in this invention are not excluded.

### STATE OF THE ART

The search for alternative sources of thermal energy to conventional ones is becoming increasingly felt and is constantly developing. In order to allow appropriate exploitation of the available thermal sources in plants for the production of sanitary hot water, the current trend is to exploit solar panel type heat sources.

In solar panel thermal plants, due to changing climatic conditions between both day and night and between seasons, use of a solar water heater is often integrated with a second supplementary heat source, of the conventional type, such as a gas-fired boiler, for example a wall-mounted modulating type boiler, to guarantee continuous supply of hot water at the required temperature.

When the temperature of the hot water supplied by the solar water heater is higher than a threshold value, a flow diverter valve sends the hot water from the solar water heater directly to a main mixer valve, which mixes it in a controlled way with cold water, thereby supplying water mixed at an optimum temperature for a sanitary plant.

The second heat source intervenes when the water temperature of the solar water heater is equal to or lower than a preset threshold value; in this case, a flow diverter valve, controlled by a thermal probe, diverts water from the solar water heater to the gas-fired boiler, which raises the temperature; the heated water is once again sent to the main mixer valve, enters the sanitary plant and is sent to the various users.

A valve assembly for integrated sanitary plants, suitable for the previously mentioned use, is known, for example, from a previous application, MI2007U000327, of the same applicant.

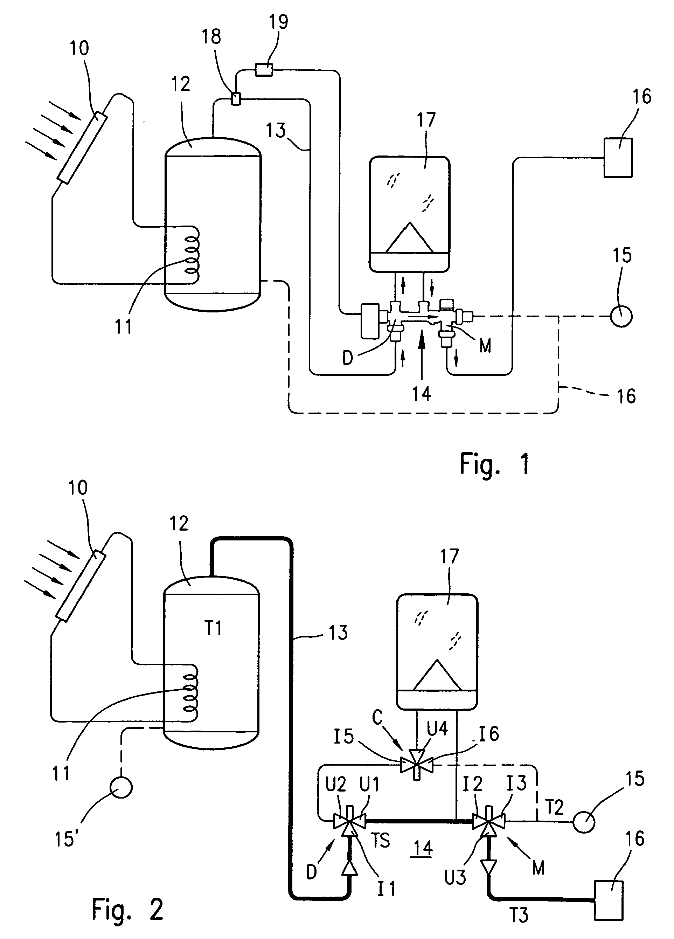

Figure 1 of the drawings shows, in diagram form, an usual solar panel plant, integrated with a conventional heating source, for the production of sanitary hot water, or for any other use, including the valve assembly referred to above.

In its most elementary form, the plant comprises a solar water heater formed of one or more solar panels 10 connected in a closed circuit to a heat exchanger 11 inside a hot water storage tank 12.

The storage tank 12, through a pipe 13, is connectable to a valve assembly 14 for supplying of hot water; the valve assembly 14 comprises a motorised diverter valve D and a thermostatic mixer valve M, which mixes the hot water of the solar water heater with cold water 15 and supplies a generic user or sanitary plant 16 with water mixed at the required temperature.

The valve assembly 14 is also connected to a normal wall-mounted gas-fired boiler, to integrate heating of the hot water supplied by the solar water heater when its temperature is lower than a preset threshold value; in this case, a thermal probe 18 measures the temperature of the hot water close to tank 12 of the solar water heater and sends a signal to the electronic control unit 19 of the diverter valve D.

With a solution of this kind, several problems exist, one of which is due to the lengthened configuration of the valve assembly, the arrangement of the pipe fittings, and the considerable overall dimensions of the same assembly provided with the relevant control devices, which imply limitations with respect to possible uses and installations, and high difficulties and working times for the installer.

Furthermore, the complexity of the plant, deriving from use of motorised diverter valve D, the thermal probe and the electronic control unit, require suitable electrical connections, maintenance and additional costs.

Still another problem is due to frequent switching-on commutations of the normal gas-fired boilers, due to the relatively high power that this type of boiler also have when functioning at a minimum; in fact, it has been found that repeated and frequent commutations of the switching on/off phases of a gas-fired boiler lead to higher energy consumption, rapid wear and possible malfunctioning of the boiler itself.

Lastly, NL-A-8401359 represents the most relevant state of the art, in that discloses a thermostatic valve assembly, according to the preamble of claim 1.

### OBJECTS OF THE INVENTION

The main object of the invention is to provide a thermostatic valve assembly for controlling the temperature of hot water in sanitary plants provided with integrated sources of thermal energy, substantially consisting of a solar energy main heating source and an auxiliary heating source consisting of an instantaneous modulating type gas-fired boiler, the valve assembly having an extremely compact structure and configuration, such as to allow simple hydraulic installation on both new and existing plants, and simultaneously allowing appropriate control of both the temperature of the hot water supplied to the user and the temperature of the hot water entering the gas-fired boiler, when this is required.

Another object is to provide a thermostatic salve assembly of the abovementioned type, which has highly simplified constructive features, and does not require electrical parts, being thus simple and easy to install.

A further object of the invention is to provide a thermostatic valve assembly and a method through which it is possible to control the temperature of the water entering the gas-fired boiler, thereby avoiding frequent switching on and off, with the consequent commutations and functioning irregularities.

### BRIEF DESCRIPTION OF THE INVENTION

The objects indicated above are achievable through a thermostatic valve assembly according to claim 1, and also through a control method according to claim 7.

According to a first aspect of the invention, a thermostatic valve assembly has been provided for controlling the temperature of the hot water in a plant comprising a solar water heater and an instantaneous gas-fired boiler, of modulating type, in which the valve assembly comprises a main thermostatic mixer valve connectable to the plant, and a flow diverter valve connectable to the solar heater, said flow diverter valve being selectively switchable to divert the hot water of the solar heater towards said main thermostatic mixer valve, and respectively towards a pipe fitting for connection to an inlet of the gas-fired boiler for temperatures of the hot water higher, and respectively equivalent to or lower than a switching temperature corresponding to a threshold temperature of the hot water of the solar heater, characterised by comprising a thermostatically operated flow diverter valve, and a thermostatic mixer valve for controlling the temperature of the water fed to the boiler, between the thermostatic flow diverter valve and the pipe fitting for connection to the inlet of the gas-fired boiler, said thermostatic flow control valve being conformed to mix the hot water of the solar heater with a mixing water having a lower temperature, and for feeding the mixed water to the gas-fired boiler at a lower temperature than the switching temperature.

According to a second aspect of the invention, the valve assembly has a compact square body, mouldable in a single piece, in which the thermostatic valves, the pipe fittings for inlet and out let of the hot water and pipe fittings to the gas-fired boiler are arranged in the corners, and in which the thermostatic valves and the pipe fittings extend along parallel axes to each other. Preferably, the adjusting members of the flow diverter valve and the main mixer valve, and also the pipe fittings to the gas-fired boiler, are positioned on one side of the valve assembly, whereas the control valve adjusting member and the pipe fittings for the solar water heater and the user plant are positioned on the opposite side of the valve assembly to the previous one; in turn, the single cold or mixing water inlet pipe fitting opens into a connection duct between the control valve and the main mixer valve.

According to another aspect of the invention, a method has been provided for controlling the temperature of hot water in an integrated plant comprising a solar water heater, a modulating instantaneous gas-fired boiler and a thermostatic valve assembly according to claim 1, in which the solar water heater is connectable to the main thermostatic mixer valve of the plant by a flow diverter valve conformed to divert the hot water of the solar water heater directly towards the main mixer valve, for temperatures of the hot water from the solar heater exceeding a switching threshold temperature for the flow diverter valve, indirectly through said gas-fired boiler, for water temperatures of the solar heater equivalent to or lower than the threshold value, characterised by selectively diverting the hot water from the solar heater to the main mixer valve, or to the gas-fired boiler, by the thermostatically operated flow diverter valve of the assembly at said threshold temperature of the hot water of the solar heater, and by reducing the temperature of the hot water fed to an inlet of the boiler by mixing it, in a controlled manner, with water at a lower temperature by the control thermostatic mixer valve of the assembly.

According to a further characteristic of the invention, the mixed hot water, supplied at the inlet of the gas-fired boiler, is controlled and maintained within a narrow range of values, lower than the threshold temperature for the hot water of the solar water heater, such as to allow optimum functioning conditions of the boiler, reducing consumption and commutations and poor functioning to a minimum. Tests conducted with instantaneous gas-fired boilers available on the market showed good functioning conditions at a threshold temperature of 45°C and with a temperature of the hot water entering the gas-fired boiler ranging between 15° and 40°C. The temperature of the water supplied to the boiler is then reduced by mixing it with cold water or with water at a lower temperature, through a thermostatic control valve, then subsequently heated before being supplied to the user plant.

### BRIEF DESCRIPTION OF THE DRAWINGS

These and further characteristics and advantages of the valve assembly and the method as claimed in the invention are clearer from the description which follows, with reference to the examples of the attached drawings, in which:
Figure 1 is a diagram of a conventional sanitary plant comprising a known control valve assembly;
Figure 2 is a diagram of a sanitary plant, comprising a valve assembly according to the invention, in its first functioning configuration;
Figure 3 is an identical diagram to Figure 2, in a second functioning configuration;
Figure 4 is a perspective view of a preferential embodiment of the valve assembly according to the invention;
Figure 5 is a top view of the valve assembly of Figure 4;
Figure 6 is a longitudinal cross section of the assembly of Figure 4, with the various components arranged in line.

### DETAILED DESCRIPTION OF THE INVENTION

Figure 1 shows a diagram of a conventional plant for the production of sanitary hot water, comprising a solar water heater 10, 12, a gas-fired boiler 17 and a known valve assembly 14, as previously mentioned.

Figure 2 shows a plant comprising a thermostatic valve assembly 14, according to the invention, in which the same numerical references as Figure 1 have been used to indicate similar or equivalent parts. The diagram in Figure 2 once again comprises a solar water heater formed of one or more solar panels 10 connected in a closed circuit to a heat exchanger 11, inside a hot water storage tank 12. Also in Figure 2, the letter M indicates a main thermostatic mixer valve, the letter D indicates the thermostatic flow diverter valve and the letter C indicates a thermostatic mixer valve for controlling the temperature of the hot water supplied to an inlet of the modulating type instantaneous gas-fired boiler 17; furthermore, the reference number 15 indicates a source or inlet for cold water, common to the two mixer valves M and C, whereas the reference number 15' indicates an inlet for cold water to the storage tank 12. Lastly, the reference number 16 indicates a generic user supplied with hot water, at a temperature controlled by mixer valve M to be optimal for a sanitary plant.

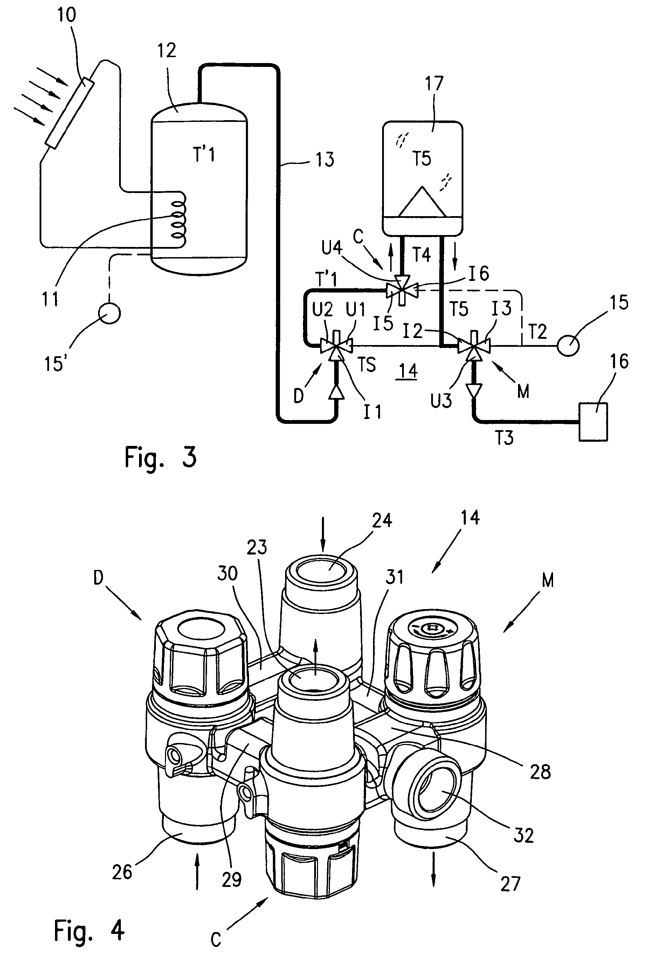

More specifically, storage tank 12 of the solar water heater, through piping 13, is connected to inlet 11 of the thermostatic flow diverter valve D, which is conformed with a first outlet U1 to divert the hot water from the solar water heater towards a first inlet I2 of main mixer valve M, when the temperature of the water of the solar water heater is at value T1 higher than a threshold value TS, at which switching of the flow diverter valve D (Figure 2) occurs, respectively with a second outlet U2 to divert the hot water from the solar water heater towards a first inlet I5 of thermostatic control valve C when the temperature of the water of the solar water heater is at a value T'1 equal to or lower than the threshold temperature TS of diverter valve D (Figure 3).

The single source 15 of cold water or shared mixing water is connected both to a second inlet 13 of the mixer valve M and to a second inlet I6 of the mixer valve C, also referred to as the control valve of the hot water entering the boiler 17.

Figure 2 shows a first functional condition of valve assembly 14, in which the water in tank 12 of the solar water heater is at a temperature T1 higher than threshold temperature TS for switching the diverter valve D. In these conditions, the valve D diverts the flow of hot water at temperature T1, directly towards inlet 12 of main mixer valve M, the other inlet I3 of which is supplied with cold water or, more generally, with water at a temperature T2 lower than T1; at the outlet of thermostatic valve M, there is therefore water mixed at a temperature T3, appropriately controlled, maintained at a constant value which is optimal for its use.

In these conditions, a flow of water does not circulate towards the control valve C and towards the boiler 17; also, the cold water inlet of thermostatic valve C is closed.

With reference to Figure 3, it is now supposed that the temperature of the hot water in storage tank 12 of the solar water heater has decreased to a value T'1 equal to or lower than the threshold temperature TS of switching of thermostatic flow diverter valve D. In these conditions, the flow of hot water at temperature T'1, coming from tank 12, is diverted to outlet U2 and towards inlet I5 of thermostatic control valve C, the inlet I6 of which is now supplied with cold water or mixed water at temperature T2.

The thermostatic control valve C mixes in a controlled way the hot water at temperature T'1 with the cold water at temperature T2, and consequently lowers the temperature of the water entering the boiler 17, maintaining it at a value T4 comprised within a preset range, such as to guarantee improved functioning conditions, thereby avoiding switching-on commutations and poor functioning conditions.

Several tests have shown that, by adjusting the threshold temperature TS of diverter valve D to a value of 45°C, optimal functioning conditions for the boiler 17 are obtained by adjusting control valve C to a temperature T4 lower than threshold temperature TS, particularly within a range of values between 15° and 40°C.

The water entering the boiler 17 at temperature T4 is heated to a temperature T5 and sent to main mixer valve M, which mixes it with water at temperature T2, once again supplying users 16 with water mixed at temperature T3.

It is clear from the above that, through the valve assembly 14, and operating with the method as claimed in this invention, in a manner to limit the temperature of the water entering the boiler 17 in an integrated solar water heater - modulating gas-fired boiler plant, for example for production of sanitary hot water, it is possible to avoid the problems of commutation and poor functioning encountered before, through an extremely simply, economical, reliable and easily installable solution.

Figures 4 to 6 show an advantageous embodiment of the valve assembly 14 according to the invention, in the form of a compact monobloc conformed to operate in the manner described above.

As may be seen from the perspective view of Figure 4, and from the remaining figures, the valve assembly 14 comprises a monobloc moulded as a single piece, with a basically square shape, in which the three thermostatic valves C, D, M and the inlet and outlet pipe fittings for the hot water are arranged at the corners of the square bloc; it may be noted in Figure 4 that the thermostatic valves and pipe fittings extend according to longitudinal axes which are parallel to each other, on opposite sides of the assembly.

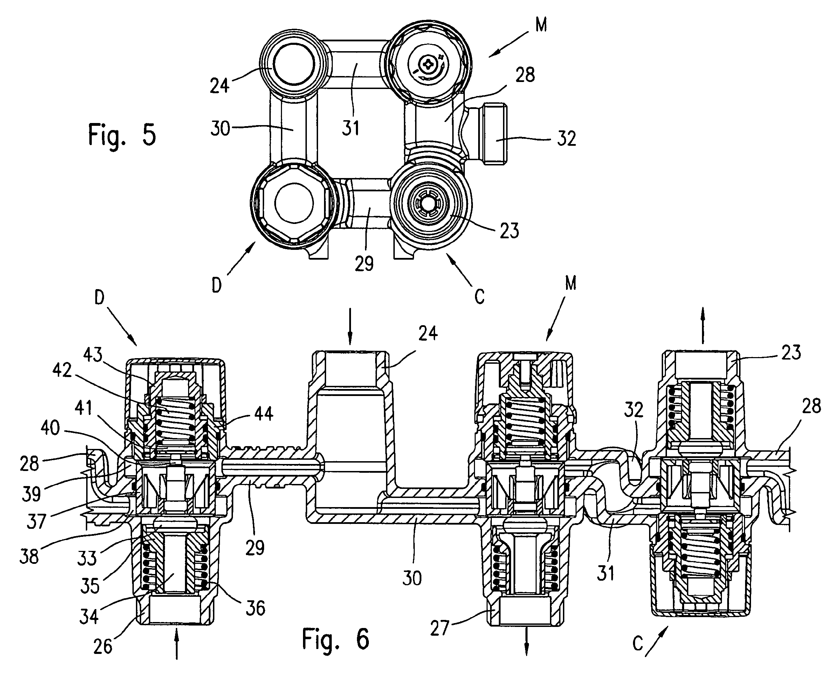

In particular, figures 4 and 6 show that the adjusting members or knobs of the diverter valve D and the mixer valve M, together with the pipe fitting 23 of the control valve C for connection to the inlet of the boiler 17 and the pipe fitting 24 for connection to the outlet of the boiler, are positioned at opposite corners on one side of valve assembly 14, whereas the adjusting member or knob of the control valve C and the inlet pipe fittings 26 for connection to the solar water heater, and the outlet pipe fitting 27 for connection to the user 16, are positioned on the side of valve assembly 14 opposite the previous one.

Thermostatic valves C, D and M and the pipe fitting 24 for connection to the outlet of boiler 17 communicate with each other via ducts 28, 29, 30 and 31, which extend between the housing seatings of the valves, along the square sides of the bloc. Lastly, the reference number 32 indicates a shared inlet for cold and mixed water; the inlet 32 for cold water extends along one side of duct 28, between the mixer valve M and the control valve C, at a right-angle to the duct 28. In this manner, an extremely compact and easy to install valve assembly is created.

The three thermostatic valves C, D and M are identical to each other from a constructive point of view, the sole difference being that control valve C is positioned upside down with respect to the others. The three thermostatic valves are per se known, and in general, as indicated for the diverter valve D, comprise a wax type thermostatic actuator 33, the bulb 34 of which is inserted in a guide bushing 35 biased by a contrast spring 36. A cylindrical closing member 37 is connected to the thermostatic actuator 33 to be moved axially between two opposite sealing seats, at respective annular chambers 38, 39 of connection to ducts 28, 29, 30 and 31. In turn, the rod 40 of the wax type thermostatic actuator rests against a piston 41 subject to the thrust of a contrast spring 42 inside an adjusting hollow rod 43, or regulation device, which sealingly slides and is screwable in a supporting element 44, in turn screwed into its own housing in the monobloc body of valve assembly 14; acting on the adjusting member 43, it is therefore possible to adjust the value of the threshold temperature for the diverter valve D and, in general, the intervention temperatures for the other two mixer valves M and C.

From what has been said and shown in the attached drawings, it may therefore be understood that a valve assembly and a method have been provided which allow the thermal energy of a solar water heater to be managed automatically, integrating it with energy supplied by a modulating type instantaneous gas-fired boiler, through a simple, compact and functionally autonomous solution, which does not require any external electricity or appropriate connections; use of a thermostatic flow diverter valve and a thermostatic control valve also make it possible to limit switching-on commutations of the gas-fired boiler during the thermal integration phases, reducing the causes of possible malfunctioning.

What is stated and shown has been provided simply by way of example of the general characteristics of the valve assembly and control method; other modifications or variations are therefore possible, without thereby deviating from the claims.

## Claims

1. A thermostatic valve assembly (14) for controlling the temperature of the hot water in a plant (16) comprising a solar water heater (10, 12) and an instantaneous gas-fired boiler (17), of modulating type, in which the valve assembly (14) comprises a main thermostatic mixer valve (M) connectable to the plant (16), and a flow diverter valve (D) connectable to the solar heater (10, 12), said flow diverter valve (D) being selectively switchable to divert the hot water of the solar heater (10, 12) towards said main thermostatic mixer valve (M), and respectively towards a pipe fitting (23) for connection to an inlet of the gas-fired boiler (17) for temperatures of the hot water higher, and respectively equivalent to or lower than a switching temperature corresponding to a threshold temperature (TS) of the hot water of the solar heater, **characterised by** comprising a thermostatically operated flow diverter valve (D), and a thermostatic mixer valve (C) for controlling the temperature of the water fed to the boiler (17), between the thermostatic flow diverter valve (D) and the pipe fitting (23) for connection to the inlet of the gas-fired boiler (17), said thermostatic flow control valve (C) being conformed to mix the hot water of the solar heater (10, 12) with a mixing water having a lower temperature, and for feeding the mixed water to the gas-fired boiler (17) at a lower temperature than the switching temperature (TS).

2. The valve assembly according to claim 1, **characterised in that** the control mixer valve (C) is conformed to maintain the temperature of the mixed water fed at the inlet to the gas-fired boiler (17), within a temperature ranging from 15° to 40°C.

3. The valve assembly according to claim 1, **characterised in that** both the thermostatic mixer valves (M, C) and the flow diverter valve (D) are integrated in a single valve body, and **in that** both the mixer valves (M, C) are connected to a single mixing water inlet (32).

4. The valve assembly according to claim 3, **characterised by** comprising a square-shaped monobloc body, conformed with seats for housing the thermostatic valves (M, C) and the flow diverter valve (D), with respective connecting ducts (28, 29, 30, 31), and by comprising pipe fittings (27; 23, 24; 26) for connection to the solar water heater (10, 12), the gas-fired boiler (17) and the plant (16).

5. The valve assembly according to claim 4, **characterised in that** the thermostatic valves (M, C), the flow diverter valve (D) and the connecting pipe fittings (27; 23, 24; 26) extend according to longitudinal axes parallel to one another, and **in that** the ducts (28, 29, 30, 31) extend along the square sides of the bloc.

6. The valve assembly according to claim 5, **characterised in that** the pipe fittings (27, 26) for connection to the solar water heater (10, 12) and to the plant (16), extend along one side of the monobloc body of the valve assembly (14), while the pipe fittings (23, 24) for connection to the gas-fired boiler (17) extend along one side of the monobloc body opposite the first one.

7. Method for controlling the temperature of hot water in an integrated plant comprising a solar water heater (10, 12), a modulating instantaneous gas-fired boiler (17) and a thermostatic valve assembly (14) according to claim 1, in which the solar water heater (10, 12) is connectable to the main thermostatic mixer valve (M) of the plant by a flow diverter valve (D) conformed to divert the hot water of the solar water heater (10, 12) directly towards the main mixer valve (M), for temperatures of the hot water from the solar heater exceeding a switching threshold temperature (TS) for the flow diverter valve (D), indirectly through said gas-fired boiler (17), for water temperatures of the solar heater equivalent to or lower than the threshold value (TS), **characterised by** selectively diverting the hot water from the solar heater (10, 12) to the main mixer valve (M), or to the gas-fired boiler (17), by the thermostatically operated flow diverter valve (D) of the assembly at said threshold temperature (TS) of the hot water of the solar heater, and by reducing the temperature of the hot water fed to an inlet of the boiler (17) by mixing it, in a controlled manner, with water at a lower temperature by the control thermostatic mixer valve (C) of the assembly (14).

8. The method according to claim 7, **characterised by** lowering the hot water temperature fed to the gas-fired boiler (17), maintaining it within a temperature range lower than the threshold temperature (TS) for switching the thermostatic flow diverter valve (D).

9. The method according to claim 8, **characterised in that** the hot water fed into the boiler (17) is maintained at a temperature ranging from 15° to 40°C.

## Patentansprüche

1. Ein thermostatischer Ventilaufbau (14) für das Kontrollieren der Temperatur des heißen Wassers in der Anlage (16) umfasst einen solaren Wassererhitzer (10, 12) und ein gasbetriebener Durchlauferhitzer (17), der modulierenden Art, in welchem der Ventilaufbau (14) ein hauptthermostatisches Mixventil (M) umfasst, das mit der Anlage (16) verbindbar ist, und das Abzweigventil (D), das mit dem Wassererhitzer (10, 12) verbindbar ist, besagtes Abzweigventil (D) ist selektiv schaltbar, um das heiße Wasser aus dem Wassererhitzer (10 ,12) zum besagten Mixventil (M) zu leiten, und zum Rohranschluss (23) zum Verbinden zu einem Eingang des Durchlauferhitzers (17) für Temperaturen des heißen Wassers höher, und gleich oder niedriger als eine Schalttemperatur die zur Grenztemperatur (TS) des heißen Wassers des Solarerhitzers korrespondiert, **dadurch gekennzeichnet, dass** das thermostatisch operierende Abzweigventil (D), und ein thermostatisches Mixventil (C) für das Kontrollieren der Temperatur des zum Durchlauferhitzer (17) fließenden Wassers, das zwischen dem thermostatischen Abzweigventil (D) und dem Rohranschluss (23) für das Verbinden zum Eingang des Durchlauferhitzers (17) ist, besagtes thermostatisches Flusskontrollventil (C) ist ausgerichtet das heiße Wasser des Wassererhitzers (10, 12) mit dem Mischwasser, das eine niedrigere Temperatur hat, zu mischen, und für das Hinzufügen des Mischwassers in den Durchlauferhitzer (17) mit einer niedrigeren Temperatur als die Grenztemperatur (TS).

2. Der Ventilaufbau gemäß Anspruch 1 **dadurch gekennzeichnet, dass** das Flusskontrollventil (C) so ausgerichtet ist, dass die Temperatur des Mischwassers, das in den Eingang des Durchlauferhitzers (17) fließt, eine Temperatur von 15°-20°C aufweist.

3. Der Ventilaufbau gemäß Anspruch 1 **dadurch gekennzeichnet, dass** beide der thermostatischen Mixventile (M, C) und das Abzweigventil (D) in einem einzelnen Ventilkörper integriert sind, und dass beide der Mixventile (M, C) zu einem einzelnen Mischwassereingang (32) verbunden sind.

4. Der Ventilaufbau gemäß Anspruch 3 **dadurch gekennzeichnet, dass** ein quadratisch geformter Vollkörper, ausgestattet mit Plätzen für das Unterbringen der thermostatischen Mixventile (M, C) und des Abzweigventils(D) mit Verbindungsrohren (28, 29, 30, 31), umfasst wird und umfassend Rohranschlüsse (27; 23, 24; 26) für die Verbindung zum Wassererhitzer (10, 12), Durchlauferhitzer (17) und der Anlage (16).

5. Der Ventilaufbau gemäß Anspruch 4 **dadurch gekennzeichnet, dass** die Mixventile (M, C), das Abzweigventil (D) und die Rohanschlüsse (27; 23, 24; 26) sich gemäß der longitudinalen Achsen, die parallel zueinander liegen, erweitern, und dass die Verbindungsrohre (28, 29, 30, 31) sich entlang der Quadratseiten des Blocks erweitern.

6. Der Ventilaufbau gemäß Anspruch 5 **dadurch gekennzeichnet, dass** die Rohranschlüsse (27, 26) für die Verbindung zum Durchlauferhitzer (10, 12) und der Anlage (16), sich entlang einer Seite des Vollblockkörpers des Ventilaufbaus (14) erweitern, während die Rohranschlüsse (23, 24) für die Verbindung zum Durchlauferhitzer (17) entlang der gegenüberliegenden Seite des Vollblockkörpers verlaufen.

7. Eine Vorrichtung für das Kontrollieren der Temperatur von heißem Wasser in einer integrierten Anlage umfassend einen Wassererhitzer (10,12), einen modulierenden Durchlauferhitzer (17) und einen thermostatischen Ventilaufbau (14) gemäß Anspruch 1, in welcher der Wassererhitzer (10, 12) zu dem hauptthermostatisches Mixventil (M) der Anlage durch ein Abzweigventil (D) verbunden werden kann, wobei das Abzweigventil (D) so ausgerichtet ist, dass das heiße Wasser des Durchlauferhitzers (10,12) direkt zum Mixventil (M) geleitet wird, für Temperaturen des heißen Wassers aus dem Solarerhitzer, das eine Grenztemperatur (TS) überschreitet für das Abzweigventil (D), indirekt durch den besagten Durchlauferhitzers (17) für Wassertemperaturen aus dem Solarerhitzer die gleich oder niedriger als die Grenztemperatur (TS) sind, **dadurch gekennzeichnet, dass** eine Auswahlabzweigung des heißen Wassers aus dem Wassererhitzer (10, 12) zum Hauptmischventil (M), oder zum Durchlauferhitzer (17), durch das thermostatisch operierende Abzweigventil (D) des Aufbaus an der besagten Grenztemperatur (TS) des heißen Wassers des Solarerhitzers, möglich ist, und dass das Reduzieren der Temperatur des in den Eingang des Durchlauferhitzers (17) eingeführten Wassers durch Mischen erreicht wird, mit Wasser mit einer niedrigere Temperatur durch ein Kontrollmixventil (C) des Ventilaufbaus (14).

8. Eine Vorrichtung gemäß Anspruch 7 **dadurch gekennzeichnet, dass** die Temperatur des in den Durchlauferhitzer (17) eingeleiteten, heißen Wassers reduziert wird, dieser Temperaturbereich wird gehalten und ist niedriger als die Grenztemperatur (TS), um das thermostatische Abzweigventil (D) zu schalten.

9. Eine Vorrichtung gemäß Anspruch 8 **dadurch gekennzeichnet, dass** das in den Durchlauferhitzer (17) eingeleiteten, heißen Wassers in einem Temperaturbereich von 15°-40°C gehalten wird.

## Revendications

1. Assemblage de soupape thermostatique (14) pour régler la température de l'eau chaude dans une installation (16) comprenant un chauffe-eau solaire (10, 12) et une chaudière instantanée chauffée au gaz (17), du type à modulation, dans lequel l'assemblage de soupape (14) comprend une soupape principale de mélange thermostatique (M) qui peut être raccordée à l'installation (16), et une soupape déviatrice d'écoulement (D) qui peut être raccordée au chauffe-eau solaire (10, 12), ladite soupape déviatrice d'écoulement (D) pouvant être commutée sélectivement pour dévier l'eau chaude du chauffe-eau solaire (10, 12) vers ladite soupape principale de mélange thermostatique (M) et, respectivement, vers un raccord tubulaire (23) à raccorder à une entrée de la chaudière chauffée au gaz (17) pour des températures de l'eau chaude supérieures et, respectivement, équivalentes ou inférieures à une température de commutation correspondant à une température de seuil (TS) de l'eau chaude du chauffe-eau solaire, **caractérisé en ce qu'**il comprend une soupape déviatrice d'écoulement actionnée par voie thermostatique (D) et une soupape de mélange thermostatique (C) pour régler la température de l'eau acheminée à la chaudière (17), entre la soupape thermostatique déviatrice d'écoulement (D) et le raccord tubulaire (23) à raccorder à l'entrée de la chaudière chauffée au gaz (17), ladite soupape thermostatique de réglage d'écoulement (C) étant conformée pour mélanger l'eau chaude du chauffe-eau solaire (10, 12) avec une eau de mélange ayant une température inférieur et pour acheminer l'eau mélangée à la chaudière chauffée au gaz (17) à une température inférieure à la température de commutation (TS).

2. Assemblage de soupape selon la revendication 1, **caractérisé en ce que** la soupape de mélange de réglage (C) est conformée pour maintenir la température de l'eau mélangée acheminée à l'entrée de la chaudière chauffée au gaz (17) dans une plage de températures de 15 à 40 °C.

3. Assemblage de soupape selon la revendication 1, **caractérisé en ce qu'**à la fois les soupapes de mélange thermostatiques (M, C) et la soupape déviatrice d'écoulement (D) sont intégrées dans un seul corps de soupape et **en ce que** les deux soupapes de mélange (M, C) peuvent être raccordées à une seule entrée d'eau de mélange (32).

4. Assemblage de soupape selon la revendication 3, **caractérisé en ce qu'**il comprend un corps monobloc de forme carrée conformé aux sièges pour loger les soupapes thermostatiques (M, C) et la soupape déviatrice d'écoulement (D) avec des conduits de raccordement respectifs (28, 29, 30, 31), et **en ce qu'**il comprend des raccords tubulaires (27 ; 23, 24 ; 26) à raccorder au chauffe-eau solaire (10, 12), à la chaudière chauffée au gaz (17) et à l'installation (16).

5. Assemblage de soupape selon la revendication 4, **caractérisé en ce que** les soupapes thermostatiques (M, C), la soupape déviatrice d'écoulement (D) et les raccords tubulaires (27 ; 2 3 , 2 4 ; 26) s'étendent selon des axes longitudinaux parallèles l'un à l'autre et **en ce que** les conduits (28, 29, 30, 31) s'étendent le long des côtés carrés du bloc.

6. Assemblage de soupape selon la revendication 5, **caractérisé en ce que** les raccords tubulaires (27, 26) à raccorder au chauffe-eau solaire (10, 12) et à l'installation (16) s'étendent le long d'un côté du corps monobloc de l'assemblage de soupape (14), tandis que les raccords tubulaires (23, 24) à raccorder à la chaudière chauffée au gaz (17) s'étendent le long d'un côté du corps monobloc opposé au premier.

7. Procédé pour régler la température de l'eau chaude dans une installation intégrée comprenant un chauffe-eau solaire (10, 12), une chaudière instantanée à modulation chauffée au gaz (17) et un assemblage de soupape thermostatique (14) selon la revendication 1, dans lequel le chauffe-eau solaire (10, 12) peut être raccordé à la soupape thermoplastique principale (M) de l'installation par une soupape déviatrice d'écoulement (D) conformée pour dévier l'eau chaude du chauffe-eau solaire (10, 12) directement vers la soupape principale de mélange (M), pour des températures de l'eau chaude du chauffe-eau solaire dépassant une température de seuil de commutation (TS) pour la soupape déviatrice d'écoulement (D), indirectement à travers ladite chaudière chauffée au gaz (17), pour des températures de l'eau du chauffe-eau solaire équivalentes ou inférieures à la valeur de seuil (TS), **caractérisé en ce que** l'on dévie sélectivement l'eau chaude du chauffe-eau solaire (10, 12) à la soupape principale de mélange (M) ou à la chaudière chauffée au gaz (17) par la soupape déviatrice d'écoulement actionnée par voie thermostatique (D) de l'assemblage à ladite température de seuil (TS) de l'eau chaude du chauffe-eau solaire, et l'on réduit la température de l'eau chaude acheminée à une entrée de la chaudière (17) en la mélangeant de manière régulée à de l'eau à une température inférieure par la soupape de mélange thermostatique de réglage (C) de l'assemblage (14).

8. Procédé selon la revendication 7, **caractérisé par** l'abaissement de la température de l'eau chaude acheminée à la chaudière chauffée au gaz (17), en la maintenant dans une plage de températures inférieure à la température de seuil (TS) pour commuter la soupape thermostatique déviatrice d'écoulement (D).

9. Procédé selon la revendication 8, **caractérisé en ce que** l'eau chaude acheminée à la chaudière (17) est maintenue à une température dans la plage de 15 à 40 °C.
